# EUROPÄISCHE PATENTSCHRIFT

(11) **EP 3 186 090 B1**
(45) Veröffentlichungstag und Bekanntmachung des Hinweises auf die Patenterteilung: **20.11.2019**
(21) Anmeldenummer: 15753689.7
(22) Anmeldetag: 24.08.2015
(51) Int. Cl.: B42D 25/41, B42D 25/435, B42D 25/45, B42D 25/346, B42D 25/351, B42D 25/373

(54) **FARBIGE LASERGRAVUR**
COLORED LASER ENGRAVING
GRAVURE AU LASER EN COULEUR

(30) Priorität: 26.08.2014 DE 102014217002
(43) Veröffentlichungstag der Anmeldung: 05.07.2017
(73) Patentinhaber: Bundesdruckerei GmbH, 10969 Berlin (DE)
(72) Erfinder: KROMPHARDT, Matthias, 14109 Berlin (DE)
(74) Vertreter: Patentanwälte Bressel und Partner mbB
(86) Internationale Anmeldenummer: PCT/EP2015/069325
(87) Internationale Veröffentlichungsnummer: WO 2016/030315

(56) Entgegenhaltungen:
- WO-A1-2005/048182
- WO-A1-2011/045180
- WO-A1-2013/139747
- US-A- 6 066 437
- US-A1- 2005 001 419

## Beschreibung

Die Erfindung betrifft eine farbige Kennzeichnung von Sicherheitsdokumenten mit Hilfe einer Laserstrahlung sowie neuartige farbig markierte Sicherheitsdokumente.

Aus dem Stand der Technik ist eine Vielzahl von Sicherheitsdokumenten bekannt. Sicherheitsdokumente werden beispielsweise als Ausweise, Führerscheine, Identifikationskarten, aber auch als sogenannte Wertdokumente in Form von Banknoten, Wertmarken oder auch in Form von Haftetiketten zur Kennzeichnung von Waren oder als Eintrittskarten oder Ähnliches verwendet. Ein Sicherheitsdokument zeichnet sich dadurch aus, dass es mindestens ein Sicherheitsmerkmal aufweist, welches eine Nachahmung, Duplizierung und/oder Verfälschung des Dokuments zumindest erschwert oder unmöglich macht.

Ein körperlich ausgebildetes Sicherheitsmerkmal wird auch als Sicherheitselement bezeichnet. Im Sinne dieser Definition ist jedes Sicherheitsdokument auch ein Sicherheitselement.

Eine große Gruppe von Sicherheitsdokumenten und/oder Sicherheitsdokumentrohlingen wird auf Basis von einzelnen Materialschichten hergestellt, die zu einem Dokumentkörper zusammengefügt werden. Bei einer Vielzahl moderner Sicherheitsdokumente bestehen die einzelnen Schichten vorzugsweise aus Kunststoffmaterialien, insbesondere thermoplastischen Kunststoffmaterialien, beispielsweise Polycarbonat (PC), Kunststoffen auf Polyurethanbasis (TPU), Acrylnitril/Butadien/Styrol/Copolymer (ABS), Polyethylenterephthalat (PIT), Polyethylen, aus einem Verbund von PC und TPU. Einzelne Schichten können jedoch auch aus Papier, Pappe oder einem Gewebe oder einem Verbund der genannten Materialien bestehen. Die einzelnen Substratschichten werden dann zu einem Dokumentkörper zusammengefügt. Dies erfolgt vorzugsweise mittels eines Laminationsverfahrens unter Ausnutzung von Hitze und Druck. Sind die einzelnen Substratschichten auf Basis desselben Polymers hergestellt, so lässt sich ein monolithischer Dokumentkörper herstellen, in dem die ursprünglichen Schichtgrenzen zwischen den einzelnen Substratschichten im fertigen Dokumentkörper anhand der Polymerstruktur nicht mehr feststellbar sind und daher eine Delamination nahezu unmöglich ist.

Eine Aufgabe von Sicherheitsmerkmalen ist es, Informationen in einem Sicherheitsdokument zu speichern und/oder darin gespeicherte Informationen gegen eine Nachahmung und/oder Verfälschung zu schützen. Insbesondere werden Sicherheitsdokumente mit Informationen versehen, die ein einzelnes Sicherheitsdokument gegenüber den übrigen gleichartigen Sicherheitsdokumenten individualisieren. Hierzu zählt beispielsweise eine Seriennummer eines Sicherheitsdokuments. Häufig werden jedoch auch Daten gespeichert, die einem Individuum oder einer Person zugeordnet sind. Hierzu zählen beispielsweise persönliche Informationen, wie ein Name, ein Geburtsdatum, aber auch biometrische Daten, wie ein Fingerabdruck, ein Gesichtsbild oder Ähnliches.

Ein besonders hohes Interesse besteht daran, solche individualisierenden Informationen auf einfache Weise in gleichartige Sicherheitsdokumente einbringen zu können. Darüber hinaus besteht ein Interesse, möglichst vielfältige Informationen auf diese Weise speichern zu können, die auf möglichst einfache Weise verifizierbar sind. Unter einem Verifizieren versteht man das Prüfen eines Sicherheitsmerkmals und/oder der darin gespeicherten oder abgesicherten Daten auf Echtheit und/oder Unversehrtheit.

Aus der EP 0 975 148 A1 ist es bekannt, durch Lasergravur in eine strahlungsempfindliche Schicht Schwärzungen beispielsweise in Form eines Portraitfotos eines Ausweisinhabers, einer Unterschrift oder dergleichen zu erzeugen. Auf diese Art und Weise können Sicherheitselemente mittels Laser beispielsweise auch in einer in einem mehrschichtigen laminierten Trägermaterial innenliegenden Schicht durch Eingravieren erzeugt werden (DE 199 07 940 A1). Allerdings werden durch die Lasergravur dabei ausschließlich Schwärzungen gebildet, sodass hergestellte individualisierende Sicherheitselemente nur in Schwarz/Weiß-Darstellung entstehen.

Aus der WO 2012/069547 A1 ist ein Sicherheitsmerkmal für ein Sicherheitsdokument oder Wertdokument bekannt, das vorzugsweise mindestens eine Dokumentlage aufweist. In einer oder mehreren ersten Ebenen befindet sich ein aus ersten Bildelementen gebildetes erstes Muster. Ferner befindet sich in einer oder mehreren zweiten Ebenen ein aus zweiten Bildelementen gebildetes und zu den ersten Bildelementen des ersten Musters passergenau angeordnetes zweites Muster. Die zweiten Bildelemente befinden sich zwischen den ersten Bildelementen und Außenseiten des Wert- oder Sicherheitsdokuments. Nur über einem Teil der ersten Bildelemente ist jeweils ein zweites Bildelement angeordnet. Die ersten Bildelemente werden transparent oder transluzent ausgebildet. Auch das übrige Wert- oder Sicherheitsdokument wird bezogen auf eine Sichtachse im Bereich der ersten Bildelemente bis auf die zweiten Bildelemente transparent oder transluzent ausgebildet, sodass im Durchlicht eine durch die Muster festgelegte Information wahrnehmbar ist. Hierbei können die ersten Bildelemente beispielsweise farbig ausgebildet sein und die zweiten Bildelemente opak. So ist es möglich, eine farbige Information in ein Sicherheitsdokument zu speichern. Die zweiten Bildelemente werden hierbei als Schwärzungen mittels Laserstrahlung über den ersten Bildelementen ausgebildet.

In der WO 2012/069536 ist ein Verfahren zur Herstellung eines Wert- oder Sicherheitsdokuments beschrieben, welches die Schritte umfasst:
(a) Herstellen eines Dokumentenrohlings durch Erzeugen eines in einer oder mehreren ersten Ebenen angeordneten und aus ersten Bildelementen gebildeten ersten Musters in und/oder auf mindestens einer ersten der mindestens einen Dokumentlage des Dokumentrohlings und
(b) Erzeugen eines in einer oder mehreren zweiten Ebenen angeordneten und aus zweiten Bildelementen gebildeten und mit den ersten Bildelementen des ersten Musters passergenau angeordneten zweiten Musters in und/oder auf der mindestens einen ersten Dokumentlage und/oder in und/oder auf mindestens einer zweiten der mindestens einen Dokumentlage,
wobei nur oberhalb eines Teils der ersten Bildelemente in dem Verfahrensschritt (b) jeweils ein zweites Bildelement erzeugt wird oder das im Verfahrensschritt (b) nur über einem Teil der ersten Bildelemente jeweils ein bereits vorhandenes zweites Bildelement entfernt wird, sodass über einem komplementären Teil der ersten Bildelemente zweite Bildelemente verbleiben. Somit kann das zweite Muster durch Hinzufügen oder Entfernen von Bildelementen gebildet werden. Die durch die zweiten Bildelemente wahrnehmbaren ersten Bildelemente bilden dann eine vorzugsweise farbige Information aus.

Aus der US 2005/0001419 A1 ist ein Verfahren bekannt, bei dem Durchbrechungen in eine oder mehrere Schichten eingebracht werden, um darunter liegende farbige Schichten freizulegen und hierüber eine Information auszubilden.

Aus der WO 2005/048182 A1 sind ein Datenträger und ein Verfahren bekannt, bei denen mittels eines Laserstrahls Kennzeichnungen in eine opake, lasersensitive Schicht und eine darunter liegende metallisierte Schicht eingebracht werden.

Aus der WO 2013/139747 A1 ist ein Sicherheitsdokument bekannt, bei dem eine Perforation aus einer Mehrzahl von Durchbrechungen durch eine opake Schicht vorgesehen ist, so dass eine Durchsicht durch die opake Schicht ermöglicht wird. Hierbei ist vorgesehen, dass abhängig von einer Betrachtungsseite unterschiedliche optische Effekte hervorgerufen werden sollen.

Der Erfindung liegt die technische Aufgabe zugrunde, ein Verfahren zur Markierung von Sicherheitsdokumenten oder Sicherheitsdokumentenrohlingen zu schaffen sowie verbesserte Sicherheitsdokumente und Sicherheitsdokumentenrohlinge, mit denen oder in denen insbesondere farbige und kontrastreiche Informationen gespeichert werden oder gespeichert sind.

### Grundgedanke der Erfindung

Der Erfindung liegt der Gedanke zugrunde, ein Farbmuster, bestehend aus mindestens zwei verschiedenen Typen von jeweils monofarbigen Farbfeldern, im Innern eines Dokumentkörpers auszubilden und ebenfalls im Innern des Dokumentkörpers mit einem Metallfeld flächig zu überlagern. In dieses Metallfeld werden Durchbrechungen eingebracht, die bezüglich einer Betrachtungsrichtung durch eine Oberseite des Dokumentkörpers registergenau mit den einzelnen Farbfeldern ausgebildet werden, sodass sich im Zusammenwirken der durch die Durchbrechungen freigelegten Farbfelder eine bunte codierte Information ergibt.

Zusätzlich ist erfindungsgemäß vorgesehen, mittels Laserstrahlung Markierungen in transparentes Material des Dokumentkörpers zwischen der Oberseite und dem Metallfeld einzubringen, die bezüglich der Betrachtungsrichtung ebenfalls im Register mit den Farbfeldern und gegebenenfalls freigelegten Durchbrechungen im Register ausgerichtet sind und die bunte gespeicherte Information durch eine Schwarz/Weiß- bzw. Graustufeninformation ergänzen. Hierdurch wird ein höherer Kontrast erreicht. Ferner weist diese Ausführungsform den Vorteil auf, dass die gespeicherte Information sich in dem Dokumentkörper über einen größeren Tiefenbereich bezüglich der Oberseite des Dokumentkörpers erstreckt. Ferner findet eine Duplizierung der Information oder zumindest eine Verschränkung der farbigen Information und der Graustufen-/Schwarz/Weiß-Information darüber statt, dass die über die Lasermarkierungen ausgebildete Information mit der bunten Information korreliert ist. Beispielsweise kann es sich bei der bunten Information um die bunten Farbanteile eines Gesichtsbilds handeln und bei den Lasermarkierungen um die Schwarz/Weiß- bzw. Graustufenanteile desselben Gesichtsbilds. Darüber hinaus besteht die Möglichkeit, die Farbinformation des Bildes in einem gröberen Raster auszubilden und dennoch hierzu angepasst im Register eine höher aufgelöste Schwarz/Weiß-Information mittels der Laserstrahlung und den Lasermarkierungen einzubringen, sodass der Eindruck einer hochaufgelösten Farbbilddarstellung erweckt wird, dessen Informationsauflösung im schwarz/weißen Bereich jedoch höher als im farbigen Bereich ist.

### Definitionen

Als farbig wird ein Gegenstand bezeichnet, der bei einem menschlichen Betrachter einen Farbeindruck hervorruft.

Als bunt wird ein Gegenstand bezeichnet, der an unterschiedlichen Stellen unterschiedlich farbige Farbeindrücke bei einem Betrachter hervorruft. Dies bedeutet, dass der Gegenstand an unterschiedlichen Stellen für den sichtbaren Wellenlängenbereich jeweils ein unterschiedliches Remissions- bzw. Transmissionsspektrum aufweist, indem die Remissionsintensität gegenüber der Wellenlänge bzw. die Transmissionsintensität gegenüber der Wellenlänge aufgetragen sind.

Als monofarbig wird eine Fläche oder ein Bereich bezeichnet, der an jeder Stelle einen einheitlichen Farbeindruck hervorruft.

Als transparent wird ein Material angesehen, durch welches mit Licht mindestens einer Wellenlänge durch das Material hindurch eine Abbildung gemäß der geometrischen Optik möglich ist. Vorzugsweise ist eine solche geometrische Abbildung durch das Material hindurch in einem großen Wellenlängenbereich des sichtbaren Spektrums möglich.

Transparentes Material kann z.B. im sichtbaren Wellenlängenbereich wellenlängenneutral sein, was auch als klar bezeichnet wird. Es findet keine oder nur eine sehr geringe und für alle Wellenlängen des sichtbaren Wellenlängenbereichs annähend gleichmäßige Abschwächung von Licht im sichtbaren Wellenlängenbereich statt. Transparentes Material kann jedoch auch eingefärbt sein, sodass es sich optisch wie ein Farbfilter verhält und nur für Licht eines Wellenlängenbereichs eine hohe Transmission aufweist. Durch eingefärbtes transparentes Material hierdurch ist eine bunte Farbwahrnehmung zumindest verändert und in der Regel nur eingeschränkt möglich.

Als sichtbarer Wellenlängenbereich wird der Wellenlängenbereich bezeichnet, in dem ein menschlicher Betrachter elektromagnetische Dipolstrahlung mit den Augen wahrnehmen kann. Dieser Bereich umfasst die Wellenlängen von etwa 380 nm bis etwa 780 nm.

Als Farbmischung wird das Hervorrufen eines Farbeindrucks bei einem Menschen verstanden, bei dem unterschiedliche monofarbige Flächen benachbart zueinander in der Weise angeordnet sind, dass der menschliche Betrachter diese einzelnen Flächen nicht getrennt aufgelöst wahrnimmt, sondern einem Bereich, in dem die einzelnen, vorzugsweise verschachtelt angeordneten, verschiedenen monofarbigen Flächen angeordnet sind, einen Farbeindruck zuordnet, der durch die unterschiedlichen monofarbigen Flächen und deren Anteile festgelegt ist. Aus dem Stand der Technik ist es bekannt, beispielsweise ein sogenanntes CYM-Farbsystem zu nutzen, welches cyanfarbene, margentafarbene und gelbfarbene Flächen verwendet, um hierüber Farbeindrücke eines sogenannten Farbraums (Gamut) bei einem menschlichen Betrachter hervorzurufen. Das Farbsystem kann um die "Farbe" Schwarz (K) ergänzt werden. CYMK-Farbmischung findet beispielsweise im Farbdruck, insbesondere im Bereich der Tintenstrahldrucker, Verwendung. Diese Art der Farbmischung wird Farbsubstraktion genannt. Wird monochromatisches Licht unterschiedlicher Wellenlängen aus dem sichtbaren Bereich überlagert, so tritt ebenfalls eine Farbmischung auf, die als Farbaddition bezeichnet wird. Ein Farbsystem der Farbaddition weist beispielsweise die Primärfarben Rot, Grün und Blau auf. Dieser Farbraum wird beispielsweise im Bereich von Fernsehbildschirmen und Lichtprojektoren verwendet.

Als opake Lasermarkierung wird eine eine Lichtdurchlässigkeit verringernde Verfärbung in einem transparenten Kunststoffmaterial bezeichnet. In der Regel wird durch einen Energieeintrag in ein Kunststoffmaterial dort eine Teilcarbonisierung des Polymermaterials bewirkt, welches eine graue bis schwarze Verfärbung des Kunststoffmaterials bewirkt.

Als opak wird eine Metallschicht angesehen, durch die hindurch weder in Remission noch in Transmission dahinterliegende farbige Felder bzw. unterschiedlich farbige Lichtemissionen mit Lichtintensitäten, wie sie für das menschliche Auge nicht gesundheitsgefährdend sind, wahrnehmbar sind.

Ein Bildelement ist eine Einheit einer farbigen Information, der ein einheitlicher Farbwert aus einem Farbraum zugeordnet ist, der eine Vielzahl von unterschiedlichen Farbeindrücken umfasst, die anhand weniger Primärfarben erzeugbar sind. Um diese unterschiedlichen Farbtöne des Bildelements erzeugen zu können, sind einem Bildelement immer eine Mehrzahl von monofarbigen Farbfeldern der entsprechenden primärfarben zugeordnet. Dies bedeutet, dass jedem Bildelement mindestens zwei Farbfelder zugeordnet sein müssen. Wird ein Farbsystem mit drei Primärfarben verwendet, so sind einem Bildelement mindestens drei Farbfelder zugeordnet, die ihrerseits den entsprechenden Primärfarben des Farbraums zugeordnet sind. Im Stand der Technik werden die Bildelemente zuweilen als Pixel bezeichnet und die zugeordneten monofarbigen Farbfelder als Subpixel bezeichnet.

### Bevorzugte Ausführungsformen

Vorgeschlagen wird ein in Anspruch 1 definiertes Verfahren zum Herstellen eines Sicherheitsdokuments.

Die opaken Lasermarkierungen sind somit im Register mit den Farbfeldern ausgerichtet.

Man erhält somit ein in Anspruch 11 definiertes Sicherheitsdokument.

Die so geschaffenen Gegenstände bieten den Vorteil, dass auf einfache Weise eine farbige Codierung einer Information in ein Sicherheitsdokument möglich ist, welche zusätzlich einen hohen Kontrast aufweist. Darüber hinaus ist die Information in unterschiedlichen Ebenen des Sicherheitsdokumentkörpers gespeichert. Wird eine Aufspaltung des Dokumentkörpers beispielsweise im Rahmen einer Delamination vorgenommen, um Fälschungen an dem Dokument vorzunehmen, so können die unterschiedlichen aufgespaltenen Teile gar nicht oder nur schwer mit anderen Teilen zusammengefügt werden, da die darin enthaltenen farbigen Informationen und Schwarz/Weiß- bzw. Graustufeninformationen der Lasermarkierung nicht registergenau aufeinander abgestimmt sind. Manipulationen sind so leicht zu erkennen. Selbst wenn dieselben Bestandteile erneut zusammengefügt werden, lässt sich die registergenaue Ausrichtung in der Regel nicht wieder herstellen. Darüber hinaus ist es möglich, beispielsweise wenn der über die Lasermarkierungen eingebrachte Informationsanteil den Schwarz- oder Graustufenanteil eines bunten Bildes darstellt, dass eine starke Korrelation zwischen dem über die Lasermarkierung eingebrachten Informationsanteil und dem farbigen Informationsanteil existiert. Auch bei einer Ausführungsform, bei der Konturen bildlich dargestellter Elemente und/oder alphanumerischer Zeichen über in Graustufen oder schwarz/weiß ausgeführte Lasermarkierungen und die restlichen Flächen der geometrischen Strukturen und/oder alphanumerischen Zeichen dann farbig codiert sind, findet eine Informationsdopplung zumindest hinsichtlich des wahrnehmbaren Sinngehalts der codierten Teilinformationen statt. Dies erhöht erneut den Schutz vor Manipulationen.

Bei einer Ausführungsform werden die Primärfarbtöne der mindestens zwei verschiedenen Typen von Farbfeldern entweder aus der Gruppe der Primärfarbtöne Cyan, Magenta, Gelb oder der Gruppe der Primärfarbtöne Rot, Grün oder Blau ausgewählt. Dieses bedeutet, dass die mindestens zwei Typen von monofarbigen Farbfelder so ausgebildet werden oder sind, dass diese entweder jeweils einen Farbeindruck eines Primärfarbtons aus der Gruppe der Farbtöne Cyan, Magenta, Gelb oder alternativ jeweils einen Farbeindruck eines Primärfarbtons aus der Gruppe der Farbtöne Rot, Grün, Blau hervorrufen.

Die Primärfarbtöne der der Gruppe Cyan, Magenta, Gelb werden bevorzugt ausgewählt, wenn die Farbfelder monofarbig und opak ausgebildet sind oder werden. Die Primärfarbtöne der Gruppe Rot, Grün, Blau werden bei transluzent ausgebildeten Farbfeldern bevorzugt.

Bei der zweiten Ausführungsform ist der Dokumentkörper vorzugsweise zwischen der Unterseite und dem mindestens einen Farbmuster zumindest transluzent ausgebildet, so dass bei einer Hinterleuchtung der Dokumentkörpers von der Unterseite eine Bertachtung des geschaffenen Sicherheitsmerkmals im Durchlicht durch die Oberseite möglich ist.

Um eine bunte Information codieren zu können ist bei einer Ausführungsform vorgesehen, dass das Farbmuster in Bildelemente zerlegbar ist, wobei jedem Bildelement ein Satz von räumlich benachbarten Farbfeldern zugeordnet ist, so dass jedes Bildelement einen Farbton aus dem Gamut (Farbraum) annehmen kann, der durch die in dem Farbmuster vorkommenden Farbtöne der monofarbigen Farbfelder aufgespannt wird, wobei der Farbton eines Bildelementes über eine Farbaddition oder Farbsubtraktion der Farbtöne der dem Bildelement zugeordneten Farbfelder festgelegt ist, die durch die im Register zu den Farbfeldern gezielt ausgebildeten Durchbrechungen freigelegt sind. Eine solche Ausgestaltung bietet den Vorteil, dass sich mit einem so ausgestalteten Farbmuster nahezu jede beliebige bunte Information codieren lässt, die sich aus Bildelementen aufbauen oder mittels Bildelementen darstellen lässt, denen jeweils ein Farbton eines Gamut zugeordnet ist, der aus Primärfarbtönen aufgespannt ist. Zum Ausbilden des Farbmusters sind nur wenige Primärfarbtöne notwendig.

Wird das Farbmuster auf eine Substratschichtoberfläche beispielsweise aufgedruckt, so benötigt man nur wenige, beispielsweise drei Druckzubereitungen, die im verdruckten Zustand jeweils einen Farbeindruck eines der Primärfarbtöne hervorrufen. Es kommen alle Druckverfahren in Betracht mit denen Substratschichten farbig bedruckt werden können. Als Druckverfahren bieten sich insbesondere Offset- und Inkjet-Druckverfahren an. Wird auf eine Substratschicht auf Kunststoffbasis gedruckt, so bieten sich Druckzubereitungen auf Basis desselben Polymers an, aus dem der Kunststoff der Substratschicht gefertigt ist. Hierdurch wird eine besonders gute Verbindung zwischen der gedruckten Information des Farbmusters und der Substratschicht gewährleistet. Ferner ist eine Delaminationsneigung im Bereich des flächig ausgebildeten Farbmusters verringert, da sich die Farbzubereitungen bei der Lamination wie das Basismaterial der Substratsicht verhalten und sich eine monolithische Verbindung zwischen Substarschichten ergibt die beide auf Basis des Kunststoffes hergestellt sind wie die Druckzubereitung.

Um die volle Flexibilität hinsichtlich der codierbaren bunten Information beim nachträglichen Einbringen der Durchbrechungen in die das Metallfeld zu besitzen, ist oder wird das Farbmuster vorzugsweise so ausgebildet, dass ein Satz von Farbfeldern jeweils mindestens ein Farbfeld jedes Typs von Farbfeldern umfasst, die in dem Farbmuster auftreten.

Vorzugsweise wird oder ist das Farbmuster der Farbfelder so aufgebaut, dass jeweils eine Mehrzahl von Farbfeldern räumlich benachbart ausgebildet sind, die in Kombination einen von unterschiedlichen Farbtönen des durch die Primärfarbtöne der in dem Farbmuster auftretenden Farbfelder aufgespannten Gamuts abhängig von der unterschiedlichen Freilegung der einzelnen Farbfelder der jeweiligen Mehrzahl von in Kombination zusammenwirkenden Farbfeldern hervorrufen.

Allgemein gilt, dass eine Durchbrechung ein Farbfeld nicht vollständig freilegen muss. Die Flächen der Durchbrechungen können variieren um die Farbanteile bezüglich der Farbaddition oder Farbsubtraktion der einzelnen Farbfelder eines Bildelements festzulegen. Somit ist bei einer Ausführungsform vorgesehen, dass die Durchbrechungen flächig unterschiedlich groß ausgebildet werden. Ebenso können einem Bildelement mehrere Farbfelder eines jeden Typs von Farbfeld zugeordnet sein.

Weiterhin ist es bei einer Ausführungsform oder Weiterbildung vorgesehen, dass die Farbelemente des jeweiligen Satzes von Farbelementen relativ zueinander in jedem der Bildelemente gleich angeordnet werden. Dieses erleichtert eine Ansteuerung eines Lasers zum Ausbilden der Durchbrechungen anhand von Farbinformationen, insbesondere dann, wenn die unterschiedlichen Farbanteile der verschiedenen Primärfarbtöne der in dem Farbmuster auftretenden Typen von monofarbigen Farbfeldern in Farbauszügen vorliegen oder in solche zerlegt werden. Farbfelder desselben Typs sind dann zumindest entlang einer Raumrichtung gleich beabstandet.

Bevorzugt wird bei einigen Ausführungsformen, dass die Farbfelder eines Satzes von Farbfelder, die einem Bildelement zugeordnet sind, in einer Reihe benachbart zueinander angeordnet sind. Diese erleichtert die Ansteuerung der Farbfelder eines Bildelements mit einem zeilenweise abtastenden Markierungslaser.

Bei einer Ausführungsform werden die Durchbrechungen und die Lasermarkierungen mit demselben Laser eingebracht. Vorzugsweise wird ein gepulster Laser verwendet. Die Pulsenergie und die Fokusposition werden unterschiedlich gewählt, um die Durchbrechungen und die opaken Lasermarkierungen auszubilden. Die Verwendung eines Lasers sorgt dafür, dass die Durchbrechungen und die opaken Lasermarkierungen einfach im Register ausbildbar sind.

Andere Ausführungsformen sehen vor, dass zwei unterschiedliche Laser eingesetzt werden, um die Durchbrechungen und die Lasermarkierungen auszubilden. Vorzugsweise sind beide Laser hinsichtlich der Pulsenergie steuerbar um unterschiedliche Durchbrechungen und unterschiedliche Schwärzungsgrade der opaken Lasermarkierungen ausbilden zu können.

Um eine nachträgliche Manipulation und auch eine unautorisierte Codierung von Rohlingen zu erschweren oder unmöglich zu machen ist bei einigen Ausführungsformen vorgesehen, dass die Farbelemente des Satzes von Farbelementen, die einem Bildelement zugeordnet sind, in den verschiedenen Bildelementen unterschiedlich angeordnet sind. Das Farbmuster ist somit nicht regelmäßig. Insbesondere, wenn zwischen der Unterseite und dem Farbmuster eine opake Schicht oder Fläche ausgebildet ist, kann das Farbmuster nicht analysiert werden, so dass eine unautorisierte Codierung nahezu unmöglich ist.

Dieses ermöglicht es, die Codierung zum Einbringen der bunten Informationen, einschließlich des Ausbildens der opaken Lasermarkierung, zeitlich und örtlich getrennt von der Fertigung der Dokumentköper auszuführen.
Bevorzugt werden die Durchbrechungen mittels Laserstrahlung in die Metallschicht des Metallfelds eingebracht. Die ausgebildeten Durchbrechungen müssen die dünne Metallschichte nicht "beseitigen", es reicht aus, wenn das Metall in eine transparente Verbindung oder Ähnliches überführt oder umgewandelt wird.

Um die dezentrale Codierung zu ermöglichen ist bei einer Ausführungsform vorgesehen, dass eine Information über die Anordnung der Farbfelder in dem Farbmuster in einer Datenbank gespeichert wird; und eine Kennung getrennt von dem Farbmuster in dem Dokumentkörper gespeichert wird, über die in der Datenbank die Information über die Anordnung der Farbfelder in dem Farbmuster identifizierbar ist; und vor dem Ausbilden der Durchbrechungen eine bunte Information erfasst wird; die in dem Dokumentkörper gespeicherte Kennung erfasst wird, anhand der in dem Dokumentkörper gespeicherten Kennung die in der Datenbank gespeicherten Information über die Anordnung der Farbfelder in dem Farbmuster ausgelesen. Die bunte Information wird in Farbauszüge passend zu den Primärfarbtönen der verschiedenen Typen von Farbfeldern des Farbmusters zerlegt und eine Positionierung der Laserstrahlung abhängig von den Farbauszuginformationen und der Information über die Anordnung der Farbfelder zum Erzeugen der Durchbrechungen vorgenommen.

Nachfolgend wird die Erfindung unter Bezugnahme auf eine Zeichnung nähere erläutert. Hierbei zeigen:
- Fig. 1: eine schematische Explosionszeichnung eines Sicherheitsdokuments;
- Fig. 2: eine Schnittansicht durch einen Sicherheitsdokumentkörper;
- Fig. 3: eine weitere Explosionszeichnung zur Veranschaulichung der Herstellung eines Sicherheitsdokumentkörpers;
- Fig. 4: eine Draufsicht auf einen Sicherheitsdokumentkörperrohling nach einer Lamination;
- Fig. 5: eine Draufsicht auf einen individualisierten Sicherheitsdokumentkörper nach Fig. 4;
- Fig. 6: eine schematische Darstellung eines Ausschnitts eines Metallfeldes mit Durchbrechungen korrespondierend mit einem Ausschnitt aus Fig. 3 zur Erläuterung der Farbcodierung; und
- Fig. 7: eine schematische Ansicht eines Flussdiagramms zur Veranschaulichung eines Verfahrens zur Herstellung eines Sicherheitsdokumentkörpers und dessen Markierung.

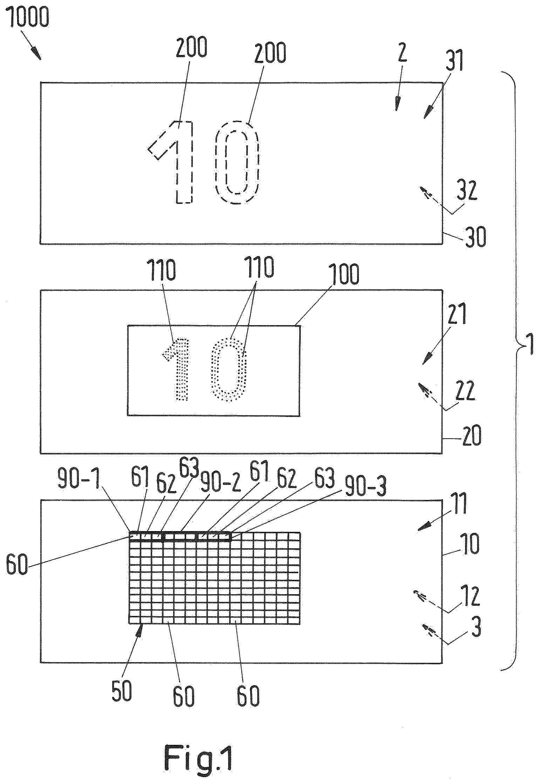

In Fig. 1 ist schematisch eine Explosionszeichnung eines Sicherheitsdokumentkörpers 1 eines Sicherheitsdokuments 1000 explosionsartig dargestellt. Die explosionsartig dargestellten Bestandteile, eine Substratschicht 10, eine weitere Substratschicht 20 und noch eine weitere Substratschicht 30, repräsentieren Schichten, die in einem Laminationsverfahren, vorzugsweise einem Hochtemperaturhochdrucklaminationsverfahren, zu dem Dokumentkörper 1 zusammengefügt sind. Insbesondere wenn die einzelnen Substratschichten 10, 20, 30 auf Basis desselben Polymers hergestellt sind, bildet sich bei der Lamination ein monolithischer Dokumentkörper 1, der an den ursprünglichen, in Fig. 1 dargestellten Substratschichtgrenzen nicht wieder delaminierbar ist. Die Darstellung der Fig. 1 dient lediglich der Erläuterung des internen Aufbaus des Sicherheitsdokuments 1000 bzw. dessen Dokumentkörpers 1 sowie zur Erläuterung der Herstellung eines solchen Dokumentkörpers 1.

Auf dem einen Substrat 10, welches sowohl transparent als auch opak ausgebildet sein kann, ist ein Farbmuster 50 ausgebildet. Dieses Farbmuster 50 besteht aus Farbfeldern 60 unterschiedlicher Typen. Im dargestellten Beispiel treten in dem Farbmuster 50 Farbfelder 60 von drei verschiedenen Typen 61, 62, 63 auf. Die Farbfelder eines Typs 61, 62, 63 sind jeweils monofarbig ausgebildet, wobei die unterschiedlichen Typen von Farbfeldern 61, 62, 63 unterschiedliche Farben aufweisen. Im dargestellten Ausführungsbeispiel sind die Farbfelder 60 des ersten Typs 61 beispielsweise monofarbig cyanfarben ausgebildet. Die Farbfelder 60 des zweiten Typs 62 sind monofarbig magentafarben und die Farbfelder 60 des dritten Typs 63 sind monofarbig gelb ausgebildet.

Im dargestellten Ausführungsbeispiel sind die unterschiedlichen Typen 61-63 von Farbfeldern 60 in dem Farbmuster 50 regelmäßig angeordnet. Hierbei sind die Farbfelder entlang von Zeilen 70 und Spalten 80 angeordnet. Innerhalb einer Zeile sind benachbart jeweils Farbfelder 60 so angeordnet, dass drei benachbarte Farbfelder drei unterschiedliche Typen von Farbfeldern sind. Die den unterschiedlichen Typen 61-63 von Farbfeldern 60 zugeordneten Farben Cyan, Magenta und Gelb sind zugleich die Primärfarben eines CMY-Farbsystems (Cyan-Magenta-Gelb-Farbsystems), mit dem sich eine Vielzahl von Mischfarben eines Farbraums (Gamuts) darstellen lassen. Anhand von jeweils drei Primärfarben lassen sich diese über eine Farbmischung realisieren. Somit sind jeweils drei Farbfelder, welche benachbart zueinander angeordnet sind und den unterschiedlichen Typen 61-63 der Farbfelder 60 zugeordnet sind, einem Bildelement 90 zugeordnet. Ein Bildelement stellt einen Bildpunkt mit beliebiger Farbe aus dem Farbraum dar, der durch die Primärfarben der drei Farbfelder 60 der Typen 61-63 aufgespannt wird. Die in das Sicherheitsdokument 1000 bzw. den Dokumentkörper 1 zu codierende bzw. codierte bunte Information ist somit aus Bildelementen aufgebaut, denen wiederum im dargestellten Ausführungsbeispiel jeweils drei Farbfelder zugeordnet sind. Jedem Bildelement 90-1, 90-2, 90-n, ... ist ein Farbelement eines Typs der unterschiedlichen Typen 61-63 der Farbfelder 60 zugeordnet.

Bei anderen Ausführungsformen können auch mehr Farbfelder einem Bildelement zugeordnete sein. Darüber hinaus sind andere Anordnungen der einem Bildelement zugeordneten Farbfelder möglich. Im dargestellten Ausführungsbeispiel sind die Farbfelder 60 als quadratische Flächen dargestellt. Ebenso ist es möglich, dass die einzelnen Farbfelder beispielsweise eine kreisförmige Geometrie aufweisen. Ferner ist es möglich, dass den Farbfeldern der unterschiedlichen Typen unterschiedlich große Flächen in dem Farbmuster zugeordnet sind. Bevorzugt werden jedoch Ausführungsformen, bei denen die geometrischen Flächen der einzelnen Farbfelder identisch sind.

Beim Herstellen des Dokumentkörpers 1 wurde auf einer weiteren Substratschicht 20 ein opakes Metallfeld 100 ausgebildet. In der dargestellten Ausführungsform überdeckt das Metallfeld 100 das Farbmuster 50 vollflächig. In dem ursprünglich vollflächig geschlossenen Farbfeld 100 sind nach dem Laminieren der weiteren Substratschicht 20 mit der einen Substratschicht 10 und noch einer weiteren Substratschicht 30 zu dem Dokumentkörper 1 mittels eines Lasers Durchbrechungen 110 eingebracht worden, welche im Register mit den Farbfeldern 60 so ausgebildet sind, dass die einzelnen Bildelemente vorgegebene Farbwerte aufgrund der Farbmischung der dem Bildelement zugeordneten Farbfelder 60 der unterschiedlichen Typen 61-63 annehmen. Sowohl die Abmessungen der Farbfelder 60 als auch die Abmessungen der Durchbrechungen 110 sind in ihren somit aneinander angepasst und so klein, dass ein menschlicher Betrachter bei einem typischen Betrachtungsabstand von etwa 20 cm die einzelnen Durchbrechungen und/oder Farbfelder, sofern er das Farbmuster 60 ohne das darüber aufgebrachte Metallfeld betrachten würde, nicht einzeln auflösen kann. In der Regel sind die Durchbrechungen und die Farbfelder so klein, dass die den mehreren Farbfeldern zugeordneten Bildelemente 90 in ihren Abmessungen unterhalb der Auflösungsgrenze einzelner Bildpunkte für einen Betrachter bei dem Abstand von 20 cm liegen. Dies bedeutet, dass ein menschlicher Betrachter die einzelnen nebeneinander angeordneten gleich oder unterschiedlich farbigen Bildelemente nicht als einzelne Bildelemente oder Bildpunkte der gemeinsam durch alle Bildelemente gespeicherten grafischen Information auflöst.

Die weitere Substratschicht 20, die über dem Farbmuster 50 angeordnet ist und auf der das Metallfeld 100 ausgebildet ist, ist aus einem transparenten Kunststoffmaterial, vorzugsweise auf Basis desselben Polymers wie die eine Substratschicht 10 ausgebildet.

Die noch weitere Substratschicht 30, welche oberhalb der Substratschicht 20 mit dem Metallfeld 100 angeordnet ist, ist aus einem transparenten Kunststoffmaterial, vorzugsweise ebenfalls auf Basis desselben Polymers wie die eine Substratschicht 10 und die weitere Substratschicht 20 ausgebildet. Die noch weitere Substratschicht 30 ist bevorzugt als laserfähige Folie ausgebildet. Dies bedeutet, dass der Folie sogenannten Fotoinitiatoren zugefügt sind, welche eine Absorption von Licht in einem vorgegebenen Wellenlängenbereich gegenüber dem Umgebungsmaterial begünstigen, jedoch eine Transparenz des Materials nicht oder unmerklich beeinflussen. Dem Fachmann sind solche Substanzen aus dem Stand der Technik bekannt. In dieser transparenten noch weiteren Substratschicht 30 sind über Lasereinstrahlung Lasermarkierungen ausgebildet, welche einen Graustufenwert oder Schwarz bezüglich einer Betrachtung durch eine Oberseite 2 des Sicherheitsdokuments 1000 bzw. des Dokumentkörpers 1 aufweisen. Diese Lasermarkierungen sind im Register mit den Farbfeldern 60 bzw. den Bildelementen 90 ausgebildet. Hierdurch wird gewährleistet, dass die als Graustufenmarkierungen oder Schwarz/Weiß-Markierungen ausgebildeten opaken Lasermarkierungen 200 in dem Volumenmaterial der weiteren Substratschicht 30 im Register mit den Bildelementen 90 bzw. den Farbfeldern 60 des Farbmusters 50 ausgebildet sind. Hierdurch wird eine Korrelation der in den opaken Lasermarkierungen 200 gespeicherten Information mit der über die Durchbrechungen 110 im Zusammenwirken mit den Farbfeldern 60 gespeicherten Information erreicht. Insgesamt ergibt sich somit eine kontrastreiche bunte Informationscodierungsmöglichkeit.

Die Farbfelder 60 sind im Verhältnis zu den Durchbrechungen 110 und den opaken Lasermarkierungen 200 vergrößert dargestellt. Insgesamt gilt für alle hier gezeigten Figuren, dass die Dimensionen der einzelnen Elemente auch im Verhältnis zueinander nicht den realen Relationen entsprechen, sondern hier so gewählt sind, dass die einzelnen Merkmale gut beschrieben werden können.

Beispielhaft ist in der Ausführungsform nach Fig. 1 die Zahl 10 in der Weise codiert, dass die Ziffer 1 mit einem schwarzen Rand und einer gefüllten Innenfläche in der Farbe Rot ausgebildet ist und die Ziffer 0 mit einem schwarzen Rand und einer blauen Füllung der Kontur ausgebildete ist.

Es versteht sich für den Fachmann, dass hier lediglich beispielhafte, sehr einfache Beispiele beschrieben sind. Die zu speichernde oder gespeicherte bunte Information kann ein beliebiges farbiges Motiv darstellen, beispielsweise ein Gesichtsbild eines Inhabers des Sicherheitsdokuments, wobei vorzugsweise zur Steigerung des Kontrasts die Konturen des Gesichts sowie markante Gesichtszüge zusätzlich über die schwarzen und grauen, d.h. opaken Lasermarkierungen ausgebildet sind. Selbst wenn es einem Fälscher gelingen sollte, den fertigen Dokumentkörper 1 in der Weise zu delaminieren, dass dieser quasi in die ursprünglichen Substratschichten zerlegt würde, aus den ursprünglich der Dokumentkörper gefertigt wurde, so wäre eine Manipulation, beispielsweise eine Änderung der Farbinformation durch ein Austauschen des Farbmusters und/oder des mit den Durchbrechungen versehenen Metallfelds relativ zu dem in der weiteren Substratschicht 30 gespeicherten Schwarz/Weiß-Bild nicht möglich, da ein solcher erzeugter Informationsunterschied zwischen der Farbinformation und der Schwarz/Weißinformation sofort auffallen würde. Dadurch, dass die schwarzen und grauen Lasermarkierungen 200 in der weiteren Substratschicht 30 im Register mit den Bildelementen 90 bzw. Farbfeldern 60 des Farbmusters 50 ausgebildet sind, ist selbst ein Delaminieren und erneutes Laminieren derselben Schichten in der Regel zu erkennen, da dieses fast immer zu leichten Ausrichtungsveränderungen zwischen den opaken Lasermarkierungen 200 und den Bildelementen 90, welche aufgrund der Durchbrechungen und der Farbfelder 60 des Farbmusters 50 gebildet sind, führt.

Bei der Ausführungsform der Fig. 1 ist eine Unterseite 23 der weiteren Substratschicht 20 auf eine Oberseite 11 der mindestens einen Substratschicht 10 laminiert. Entsprechend ist eine Unterseite 33 der noch weiteren Substratschicht 30 auf eine Oberseite 21 der weiteren Substratschicht 20 laminiert. Eine Unterseite 12 der mindestens einen Substratschicht 10 bildet eine Unterseite 3 des Dokumentkörpersl bzw. des Sicherheitsdokuments 1000. Entsprechend bildet eine Oberseite 31 der noch weiteren Substratschicht 30 eine Oberseite des Dokumentkörpersl bzw. des Sicherheitsdokuments 1000.

Bei anderen Ausführungsformen kann ein Dokumentkörper aus eine abweichenden Anzahl von Substratschichten gefertigt werden.

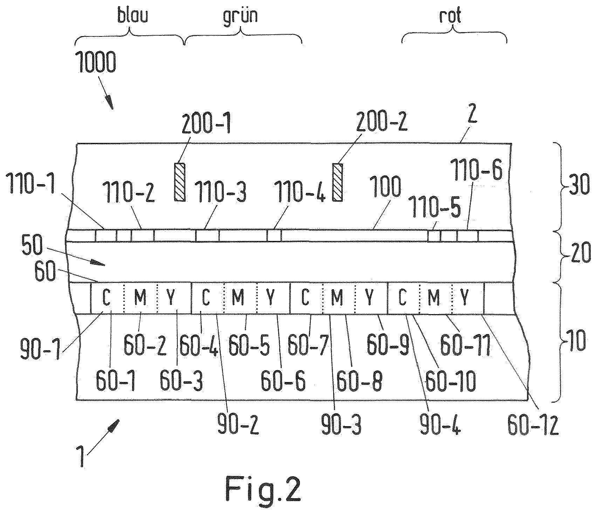

In Fig. 2 ist eine schematische Schnittansicht durch einen Bereich des Sicherheitsdokuments 1000 dargestellt, in dem das neuartige Sicherheitsmerkmal zur kontrastreichen Speicherung einer bunten Information ausgebildet ist. Über dem Farbmuster 50, welches aus drei Typen 61-63 von Farbfeldern 60 gebildet ist, ist erneut ein Metallfeld 100 ausgebildet. Das Material zwischen dem Farbfeld 50 und dem Metallfeld 90 ist transparent. Ferner ist das Material zwischen einer Oberseite 2 und dem Metallfeld 100 im Volumen transparent, bis auf opake Lasermarkierungen 200. Im dargestellten Ausschnitt sind insgesamt exemplarisch vier Bildelemente 90-1 bis 90-4 dargestellt. Diese weisen jeweils drei Farbfelder 60 der Farbfeldtypen 61 (Cyan), 62 (Magenta), 63 (Gelb) auf.

Die Durchbrechungen 110-1, 110-2, die dem Bildelement 90-1 zugeordnet sind, legen die Farbfelder 60-1 und 60-2 des Bildelements 90-1 frei. Hierdurch ergibt sich eine Mischfarbe Blau.

Bei dem Bildelement 90-2 legen die Durchbrechungen 110-3 und 110-4 die Farbfelder 60-4 und 60-6 frei, welche cyanfarben und gelb sind. Als Mischfarbe für das Bildelement ergibt sich somit die Farbe Grün.

Bei dem dritten Bildelement 90-3 ist keine Durchbrechung ausgebildet. In diesem Bildelement wird somit eingestrahltes Licht vollständig remittiert. Abhängig davon, wie das Metallfeld ausgebildet ist, wird somit weißes Licht als weißes Licht reflektiert. Ebenso ist es möglich, das Metallfeld einzufärben, beispielsweise weiß einzufärben, ohne dessen Eigenschaft zu verändern, dass über Laserstrahlung transparente Durchbrechungen auf einfache Weise im Innern eines Dokumentenkörpers ausbildbar sind.

Das vierte im dargestellten Bereich befindliche Bildelement 90-4 sind die Durchbrechungen 110-5, 110-6 zugeordnet, welche die Farbfelder 60-11, 60-12 freilegen, welche die Primärfarben Magenta und Gelb aufweisen. Das Bildelement 60-4 ruft somit einen roten Mischfarbeindruck hervor.

Oberhalb des Metallfelds 100, d.h. zwischen dem Metallfeld 100 und einer Oberseite 2 des Dokumentkörpers 1, sind opake Lasermarkierungen 200-1, 200-2 im Register mit den Farbfeldern bzw. den Bildelementen 90 ausgebildet. Im Bereich des ersten Bildelements bzw. oberhalb des Farbfeldes 60-3 ist eine schwarz-opake Lasermarkierung 200-1 ausgebildet. Oberhalb des magentafarbenen Farbfelds 60-8 im dritten Bildelement 90-3 ist eine weitere opake Lasermarkierung 200-2 ausgebildet, welche einen 50-%-Graustufenwert darstellt. Auch eine solche Lasermarkierung wird hier als opake Lasermarkierung bezeichnet, auch wenn gegebenenfalls ein Durchtritt einer gewissen Lichtmenge des sichtbaren Lichts durch eine solche graue Lasermarkierung hindurch erfolgen kann. Im Zusammenhang mit den Lasermarkierungen bedeutet der Begriff opak lediglich, dass diese sich von der transparenten Umgebung abheben und zumindest einen Teil des Lichts am Durchtritt hindern bzw. in Remission beobachtbar sind. Insgesamt ist durch die bunte Codierung zusammen mit den opaken Lasermarkierungen 200 eine kontrastreiche bunte Informationscodierung in dem Sicherheitsdokument 1000 des Dokumentkörpers 1 vorgenommen, welche einen kontrastreichen bunten Eindruck bei einem Betrachter vermittelt.

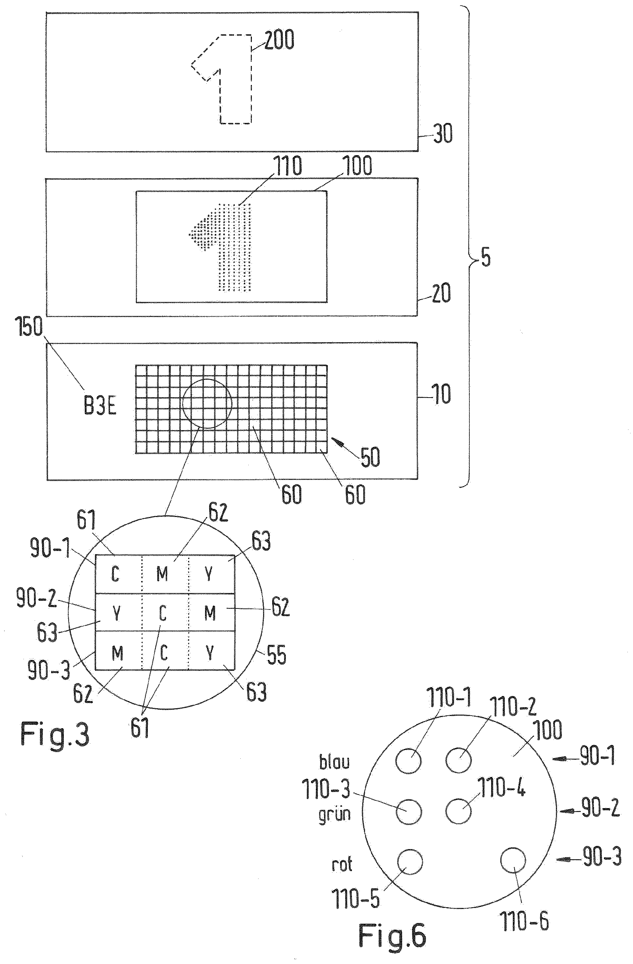

In Fig. 3 sind eine Substratschicht 10, eine weitere Substratschicht 20 und noch eine weitere Substratschicht 30 dargestellt, die zur Herstellung eines Dokumentkörperrohlings 5 verwendet werden. Gleiche technische Merkmale sind mit denselben Bezugszeichen versehen wie in den übrigen Figuren. Auf die eine Substratschicht 10 sind neben dem Farbfeld 50 alphanumerische Zeichen als eine Kennung 150 aufgedruckt oder in anderer Weise markiert, um hierüber eine Kennung zu speichern, welche mit Anordnungsinformationen der Farbfelder in dem Farbmuster 50 korrespondiert. Die Farbfelder 60 sind in dieser Ausführungsform in dem Farbmuster unregelmäßig in der Weise angeordnet, dass eine Reihenfolge der unterschiedlichen Typen von Farbfeldern, die einem Bildelement zugeordnet sind, in den einzelnen Bildelementen unregelmäßig variieren. Zwar weist jedes Bildelement erneut drei Farbfelder der unterschiedlichen Typen von Farbfeldern auf, die Reihenfolge der einzelnen Farbfelder in einem Bildelement variiert jedoch von Bildelement zu Bildelement auf quasi stochastische Weise. Dieses ist in einem vergrößerten Ausschnitt 55 exemplarisch gezeigt, wobei die Buchstaben "c", "m", "y" die Farbe des jeweiligen Farbfeldes 60 im CMY-Farbsystem angeben. Um eine spätere gezielte Markierung in der Weise zu ermöglichen, dass ein Farbeindruck des entsprechenden Bildelements 90 gezielt festgelegt werden kann, ist bei der Markierung eine genaue Kenntnis der Anordnung der Farbfelder 60 in einem Bildelement 90 notwendig. Daher werden die Anordnungsinformationen gemeinsam mit der Kennung in einer Datenbank abgelegt und können über die Kennung dort erneut aufgefunden und abgerufen werden.

Auf der weiteren Substratschicht 20 ist ein geschlossenes flächiges Metallfeld 100 ausgebildet, welches in seiner Größe an das Farbmuster 50 angepasst ist, sodass beim Übereinanderschichten der Substratschichten 10 und 20 das Metallfeld das Farbmuster 50 vollständig flächig überdeckt. Die noch weitere Substratschicht 30 ist erneut laserfähig ausgebildet und transparent.

In Fig. 4 ist eine Draufsicht auf einen Dokumentrohling 5 vor einem Einbringen von Durchbrechungen und vor dem Einbringen von opaken Lasermarkierungen gezeigt. Zu erkennen ist durch eine Oberseite 2 des Dokumentkörpers 1 die Kennung 150 sowie das homogene geschlossene Metallfeld 100. Eine Markierung eines solchen Dokumentkörperrohlings 5 kann örtlich und zeitlich getrennt von der Herstellung des Dokumentkörperrohlings 5 erfolgen.

In den Dokumentkörperrohling 5 können ebenso wie in ein Sicherheitsdokument, wie es in den vorangegangenen Figuren gezeigt und beschrieben ist, eine Vielzahl weiterer Sicherheitsmerkmale und Sicherheitselemente integriert werden, um weitere Informationen im Dokument zu speichern und eine Verifikation und Authentifizierung des Dokuments nach den verschiedensten Verifikationsverfahren zu ermöglichen. Ebenso kann ein solches Dokument einen Mikrochip oder weitere Bestandteile enthalten.

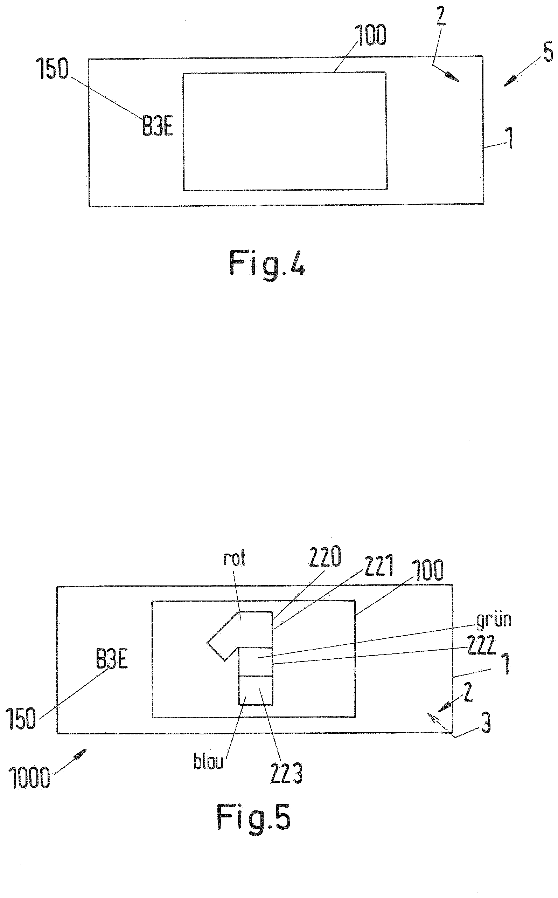

Um eine farbige Information in den Dokumentkörperrohling 5 zu speichern, wird zunächst dessen Kennung 150 erfasst. Anhand der Kennung können aus der Datenbank die Anordnungsinformationen der einzelnen Farbfelder in dem Farbmuster 50 ausgelesen werden. Zusätzlich werden bunte Bildinformationen bereitgestellt, die in das Sicherheitsmerkmal gespeichert werden sollen. Anhand dieser Bildinformationen und der Anordnungsinformationen über die Farbfelder werden beispielsweise Farbauszüge für die Farben Rot, Grün und Blau eines RGB-Farbsystems erstellt. Zusätzlich werden die Schwarzanteile und/oder Konturen in einem weiteren "Farbauszug" der Farbe Schwarz zusammengefasst. Anschließend werden mit einem Laser in das Metallfeld 100 gezielt die Durchbrechungen über den Farbfeldern 60 des Farbmusters 50 eingebracht, die zum Ausbilden eines bestimmten Farbwerts für das entsprechende Bildelement notwendig sind. Hierbei kann eine Größe der einzelnen Durchbrechungen für die einzelnen darunter liegenden Farbfelder variieren. Zeitgleich oder anschließend werden mit demselben oder einem weiteren Laser die opaken Lasermarkierungen zum Ausbilden der schwarzfarbigen "Farbanteile" und/oder Konturen in dem Dokumentkörperrohling markiert. So ergibt sich ein kontrastreiches buntes Bild. Beispielhaft ist eine Zahl 1 mit einer schwarz berandeten Kontur 220 dargestellt, die changierend von Rot über Grün zu Blau in Streifen 221, 222, 223 zerlegt ist. Bei der in Fig. 5 dargestellten Ausführungsform sind alle Substratschichten, d.h. die eine Substratschicht 20, die weitere Substratschicht 30 und die noch weitere Substratschicht 40 transparent ausgebildet, sodass das Sicherheitsmerkmal im Durchlicht betrachtet werden kann. Die Umrandung ist hierbei im Register mit der farbigen bunten Innenfläche der Ziffer im Register ausgerichtet.

Nur zur Veranschaulichung ist in Fig. 6 gezeigt, wie die Farben blau, grün und rot für die Bildelemente 90-1, 90-2, 90-3 des Ausschnitts aus Fig. 3 jeweils mit zwei Durchbrechungen 110-1, 110-2; 110-3, 110-4 und 110-5, 110-6 erzeugt werden können.

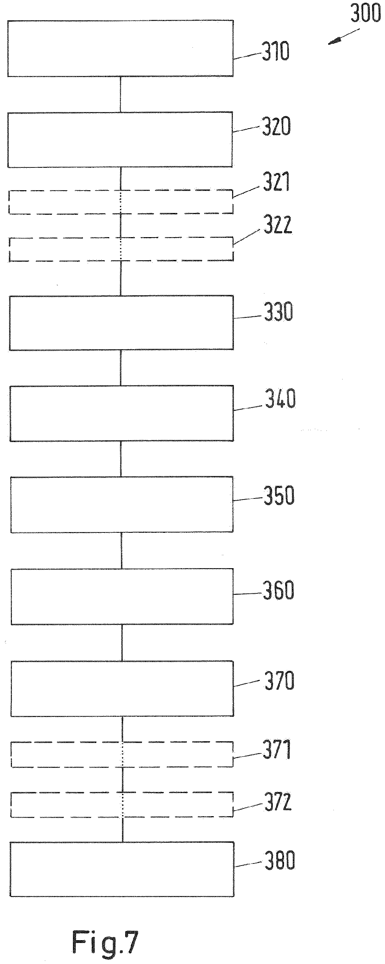

In Fig. 7 ist schematisch ein Ablaufdiagramm für ein Verfahren 300 zum Herstellen eines solchen Sicherheitsdokuments bzw. für das farbige Markieren eines Dokumentenrohlings beschrieben. Zunächst werden ein oder mehrere Substratschichten bereitgestellt 310. Hierbei kann eine unterschiedliche Anzahl von Substratschichten bereitgestellt werden, von denen zumindest einige transparent oder zumindest in einem gewissen Volumenbereich transparent ausgebildet sind. Bei einer Ausführungsform wird bei dem Bereitstellen von Substratschichten 310 eine metallbeschichtete Substratschicht oder eine dünne Metallfolie bereitgestellt. Ferner wird bei einigen Ausführungsformen eine der Substratschichten als sogenannte laserfähige Substratschicht bereitgestellt, welche Substanzen enthält, die eine Lasermarkierbarkeit unterstützen.

Auf eine der bereitgestellten Substratschichten wird anschließend ein flächig ausgedehntes Farbmuster aus mindestens zwei Typen von monofarbigen Farbfeldern aufgebracht. Dieses wird vorzugsweise aufgedruckt 320. Alternativ kann eine coextrudierte Folie aus Farbstreifen als Farbmuster bereitgestellt werden. Ist beim Bereitstellen der Substratschichten 310 keine Metallfolie oder keine mit einem Metallfeld versehene Folie bereitgestellt worden, wird auf eine der Substratschichten ein Metallfeld aufgebracht 330. In die einzelnen Substratschichten können eine Vielzahl weiterer Sicherheitsmerkmale und Sicherheitselemente eingebracht werden. Die Substratschichten werden anschließend so übereinander geschichtet 340, dass das Metallfeld in einem zusammenhängenden Flächenbereich das Farbmuster flächig bezüglich einer Betrachtungsrichtung durch eine Oberseite des Substratschichtenstapels bedeckt. Die Substratschichten zwischen der mit dem Farbmuster versehenen Substratschicht und der Oberseite des Substratschichtenstapels sind bis auf das Metallfeld zumindest im Bereich der Überdeckung des Metallfelds und des Farbmusters transparent ausgebildet.

Anschließend werden die Substratschichten in einem Laminationsverfahren unter Aufwendung von Druck und Wärme zu einem Laminationskörper, der auch als Sicherheitsdokumentenrohling oder Dokumentenrohling bezeichnet wird, zusammengefügt 350. Um diesen Dokumentenrohling farbig zu markieren, wird eine zu markierende bunte Information bereitgestellt 360. Diese wird in Farbauszüge zerlegt, die mit den Typen von monofarbigen Farbfeldern korrespondieren 370. Sofern das Farbmuster nicht regelmäßig ausgebildet ist, sondern beispielsweise dokumentenrohlingindividuell ausgebildet ist, wird vorzugsweise beim Aufbringen des Farbmusters zusätzlich eine Kennung auf den Dokumentenkörper getrennt von dem Farbmuster aufgebracht 321. Bei einigen Ausführungsformen kann auch in dem Farbmuster selbst am Rand über eine Abfolge von Farbfeldern eine solche Kennung codiert sein. Bei Ausführungsformen mit unregelmäßig angeordneten Typen von Farbfeldern werden Anordnungsinformationen über die einzelnen Farbfelder in dem Farbmuster der Kennung zugeordnet und vorzugsweise in einer Datenbank gespeichert 322. Beim Zerlegen der bereitgestellten bunten zu codierenden Information in die Farbauszüge oder spätestens beim Einbringen von Durchbrechungen in das Metallfeld wird die Anordnung der Farbfelder benötigt. Daher wird bei Ausführungsformen mit unregelmäßig angeordneten Typen von Farbfeldern die Kennung erfasst 371 und die Anordnungsinformationen aus der Datenbank ausgelesen 372. Anhand der Farbauszuginformationen für die einzelnen Bildelemente der zu codierenden Farbinformation und den Anordnungsinformationen der entsprechenden Farbfelder in jedem Bildelement wird ein Laser angesteuert, um die Durchbrechungen in dem Metallfeld im Register mit den einzelnen Farbfeldern über ein Einstrahlen von Laserstrahlung auszubilden 380. Anschließend oder zeitgleich werden entweder die Informationen eines schwarzen Farbauszugs oder Konturinformationen mittels desselben und eines weiteren Lasers im Register mit den Farbfeldern und Bildelementen in das transparente Kunststoffmaterial zwischen der Oberseite des Sicherheitsdokumentenrohlings und dem Metallfeld über Laserstrahlung markiert 390. Anschließend ist das individuell bunt markierte Sicherheitsdokument fertiggestellt.

Es versteht sich, dass lediglich beispielhafte Ausführungsformen in den einzelnen Ausführungsbeispielen im Zusammenhang mit den Figuren beschrieben sind. Es können sehr viel kompliziertere bunte Muster in ein solches Sicherheitsdokument auf einfache Weise dokumentenindividuell codiert werden.

### Bezugszeichenliste

- 1: Dokumentkörper
- 2: Oberseite
- 3: Unterseite
- 5: Dokumentkörperrohling
- 10: Substratschicht
- 11: Oberseite
- 12: Unterseite
- 20: weitere Substratschicht (mit Metallfeld/Metallfolie)
- 21: Oberseite
- 22: Unterseite
- 30: noch weitere Substratschicht (laserfähig)
- 31: Oberseite
- 32: Unterseite
- 50: Farbmuster
- 60: Farbfelder
- 60-n: n-tes Farbfeld
- 61: erster Typ Farbfeld
- 62: zweiter Typ Farbfeld
- 63: dritter Typ Farbfeld
- 70: Zeile
- 80: Spalte
- 90: Bildelement
- 90-n: n-tes Bildelement
- 100: Metallfeld
- 110: Durchbrechung
- 110-n: n-te Durchbrechung
- 200: Lasermarkierung
- 200-n: n-te Lasermarkierung
- 220: Kontur
- 221: Streifen (rot)
- 222: Streifen (grün)
- 223: Streifen (blau)
- 300: Verfahren zum Herstellen und Markieren eines Sicherheitsdokuments
- 310: Bereitstellen von Substratschichten
- 311: Bereitstellen einer Metallfolie
- 312: Bereitstellen einer laserfähigen Folie
- 320: Ausbilden eines Farbmusters (Aufdrucken von Farbfeldern)
- 321: Aufbringung einer Kennung
- 322: Speichern von Anordnungsinformationen über die einzelnen Farbfelder
- 330: Aufbringen eines Metallfelds
- 340: Zusammentragen der Substratschichten
- 350: Laminieren/Zusammenfügen zu einem Dokumentenkörper
- 360: Bereitstellen einer bunten zu speichernden Information
- 370: Zerlegen in Farbauszüge korrespondierend zu den Primärfarben der monofarbigen Typen von Farbfeldern
- 371: Erfassen der Kennung
- 372: Auslesen der Anordnungsinformationen für die Farbfelder
- 380: Ansteuern eines Lasers und Einstrahlen von Laserlicht zum Ausbilden von Durchbrechungen in dem Metallfeld
- 390: Ansteuern eines Lasers zum Einbringen von Lasermarkierungen im Register mit den Farbfeldern
- 1000: Sicherheitsdokument

## Patentansprüche

1. Verfahren zum Herstellen eines Sicherheitsdokuments (1000) umfassend die Schritte:
Bereitstellen mindestens einer Substratschicht (10);
Aufbringen eines Farbmusters (50) bestehend aus mindestens zwei verschiedenen Typen (61-63) von jeweils monofarbigen Farbfeldern (60) auf eine Oberfläche der mindestens einen Substratschicht oder im Innern der mindestens einen Substratschicht (10), wobei die verschiedenen Typen (61-63) von Farbfeldern (60) verschiedene Farbeindrücke von Primärfarbtönen eines Gamuts hervorrufen;
Bereitstellen mindestens einer weiteren Substratschicht (20) mit mindestens einem flächig ausgebildeten, im sichtbaren Wellenlängenbereich opaken Metallfeld (100) oder Bereitstellen der mindestens einen weiteren Substratschicht (20) und Aufbringen des mindestens einen flächig ausgebildeten, im sichtbaren Wellenlängenbereich opaken Metallfelds (100) auf eine Oberfläche der mindestens einen Substratschicht (10) oder eine Oberfläche der mindestens einen weiteren Substratschicht (20);
Zusammentragen der mindestens einen Substratschicht (10) und der mindestens einen weiteren Substratschicht (20) in der Weise, dass weder das Farbmuster noch das mindestens eine flächig ausgedehnte , im sichtbaren Wellenlängenbereich opake Metallfeld (100) an einer Oberseite oder Unterseite des Substratschichtenstapels angeordnet sind und das mindestens eine flächig ausgedehnte Metallfeld das Farbmuster flächig in zumindest einem zusammenhängenden Bereich bezüglich einer Betrachtungsrichtung durch eine Oberseite des Substratschichtenstapels überlagert;
Zusammenfügen des Substratschichtenstapels zu einem Dokumentkörper (1) in einem Laminationsverfahren;
Einbringen von Durchbrechungen in das Metallfeld (100) mittels Laserstrahlung in der Weise, dass die Durchbrechungen registergenau zu jeweils einem der Farbfelder (60) bezüglich einer vorgegebenen Betrachtungsrichtung durch die Oberseite des Dokumentkörpers (1) angeordnet sind, so dass im Zusammenwirken der durch die Durchbrechungen (110) für eine Betrachtung durch die Oberseite des Laminationskörpers hindurch freigelegten Farbfelder (60) eine bunte Information codiert wird und
Einbringen von opaken Lasermarkierungen (200) in im sichtbaren Wellenlängenbereich transparentes Material des Dokumentkörpers (1) zwischen der Oberseite (2) des Dokumentkörpers und dem Metallfeld (100) mittels Laserstrahlung, die die bunte Information registergenau ergänzen.

2. Verfahren nach Anspruch 1, **dadurch gekennzeichnet, dass** die Primärfarbtöne der mindestens zwei verschiedenen Typen (61-63) von Farbfeldern entweder aus der Gruppe der Primärfarbtöne Cyan, Magenta, Gelb oder der Gruppe der Primärfarbtöne Rot, Grün oder Blau gewählt werden.

3. Verfahren nach einem der Ansprüche 1 oder 2, **dadurch gekennzeichnet, dass** das Farbmuster (50) so ausgebildet wird, dass das Farbmuster (50) in Bildelemente (90) zerlegbar ist, wobei jedem Bildelement (90) ein Satz von räumlich benachbarten Farbfeldern (60) zugeordnet ist, so dass jedes Bildelement einen Farbton aus dem Gamut annehmen kann, der durch die in dem Farbmuster (50) vorkommenden Farbtöne der Farbfelder (60) aufgespannt wird, wobei der Farbton eines Bildelementes über eine Farbaddition oder Farbsubtraktion der Farbtöne der dem Bildelement zugeordneten Farbfelder festgelegt ist, die durch im Register zu den Feldern gezielt ausgebildeten Durchbrechungen (110) freigelegt sind.

4. Verfahren nach Anspruch 3, **dadurch gekennzeichnet, dass** das Farbmuster so ausgebildet wird, dass ein Satz von Farbfeldern (60) jeweils mindestens ein Farbfeld jedes Typs (61-63) von Farbfeldern umfasst, die in dem Farbmuster (50) auftreten.

5. Verfahren nach einem der Ansprüche 3 oder 4, **dadurch gekennzeichnet, dass** die Farbfeldern (60) des jeweiligen Satzes von Farbfeldern (60) relativ zueinander in jedem der Bildelemente (90) gleich angeordnet werden.

6. Verfahren nach einem der Ansprüche 3 oder 4, **dadurch gekennzeichnet, dass** die Farbfeldern (60) des Satzes von Farbfeldern (60), die einem Bildelement (90) zugeordnet sind, in den verschiedenen Bildelementen (90) unterschiedlich angeordnet sind.

7. Verfahren einem der vorangehenden Ansprüche, **dadurch gekennzeichnet, dass** das Farbmuster (50) der Farbfelder (60) so aufgebaut wird, dass jeweils eine Mehrzahl von Farbfeldern (60) räumlich benachbart ausgebildet sind, die in Kombination einen von unterschiedlichen Farbtönen des durch die Primärfarbtöne der in dem Farbmuster (50) auftretenden Farbfelder (60) aufgespannten Gamuts abhängig von der unterschiedlichen Freilegung der einzelnen Farbfelder (60) der jeweiligen Mehrzahl von in Kombination zusammenwirkenden Farbfeldern (60) hervorrufen.

8. Verfahren nach einem der vorangehenden Ansprüche, **dadurch gekennzeichnet, dass** die Durchbrechungen (110) flächig unterschiedlich groß ausgebildet werden.

9. Verfahren nach einem der vorangehenden Ansprüche, **dadurch gekennzeichnet, dass** die opake Lasermarkierung (200) zeitlich und örtlich getrennt von der Fertigung eines Dokumentköperrohlings (5) ausgeführt wird.

10. Verfahren nach Anspruch 4, **dadurch gekennzeichnet, dass** eine Information über die Anordnung der Farbfelder (60) in dem Farbmuster (50) in einer Datenbank gespeichert wird; und eine Kennung (150) getrennt von dem Farbmuster (50) in dem Dokumentkörper (1) gespeichert wird, über die in der Datenbank die Information über die Anordnung der Farbfelder (60) in dem Farbmuster (50) identifizierbar ist; und vor dem Ausbilden der Durchbrechungen (110) eine bunte Information erfasst wird; die in dem Dokumentkörper gespeicherte Kennung (150) erfasst wird, anhand der in dem Dokumentkörper gespeicherten und erfassten Kennung die in der Datenbank gespeicherten Information über die Anordnung der Farbfelder (60) in dem Farbmuster (50) ausgelesen werden, die bunte Information in Farbauszüge passend zu den Primärfarbtönen der verschiedenen Typen von Farbfeldern (60) des Farbmusters (50) zerlegt wird und der Laserstrahlung abhängig von den Farbauszuginformationen und der Information über die Anordnung der Farbfelder (60) zum Erzeugen der Durchbrechungen in den Dokumentkörper (1) positioniert eingebracht wird.

11. Sicherheitsdokument (1000) umfassend einen Laminationskörper, der aus mehreren Schichten zusammengefügt ist, wobei der Laminationskörper eine Oberseite (2) und eine gegenüberliegende Unterseite (3) aufweist und wobei in mindestens einer in dem Laminationskörper innen liegenden Ebene parallel zur Oberseite (2) ein Farbmuster (50) aufgebracht ist, welches aus mindestens zwei verschiedenen Typen (61-63) von jeweils monofarbigen Farbfeldern (60) besteht, und zwischen dem Farbmuster und der Oberseite (2) ein im sichtbaren Spektralbereich opakes Metallfeld (100) angeordnet ist, das zumindest einen zusammenhängenden Bereich des Farbmusters bis auf in diesem Metallfeld (100) ausgebildete Durchbrechungen bezüglich einer vorgegebenen Betrachtungsrichtung überdeckt, wobei die Durchbrechungen bezüglich der vorgegebenen Betrachtungsrichtung im Register mit den Farbfeldern (60) des Farbmusters (50) ausgebildet sind, so dass sich im Zusammenwirken der durch die Durchbrechungen (110) für eine Betrachtung durch die Oberseite (2) des Laminationskörpers hindurch freigelegten Farbfelder (60) eine bunte Information codiert ist, wobei das Material des Dokumentkörpers zumindest in einem Volumenbereich, der einen Teilbereich des Bereichs überlagert, in dem das mindestens eine Metallfeld (100) das Farbmuster (50) überdeckt, im sichtbaren Wellenlängenbereich transparent ist, wobei in dem Volumenbereich jedoch opake Lasermarkierungen (200) zwischen der Oberseite (2) des Dokumentkörpers und dem Metallfeld (100) ausgebildet sind, die die bunte Information registergenau bezüglich der vorgegebenen Betrachtungsrichtung ergänzen.

12. Sicherheitsdokument nach Anspruch 11, **dadurch gekennzeichnet, dass** das Farbmuster (50) der Farbfelder (60) so aufgebaut ist, dass jeweils eine Mehrzahl von Farbfeldern (60) räumlich benachbart ausgebildet sind, die in Kombination einen von unterschiedlichen Farbtönen des durch die Primärfarbtöne der in dem Farbmuster (50) auftretenden Farbfelder (60) aufgespannten Gamuts abhängig von der unterschiedlichen Freilegung der einzelnen Farbfelder (60) der jeweiligen Mehrzahl von in Kombination zusammenwirkenden Farbfeldern (60) erzeugen können.

13. Sicherheitsdokument nach Anspruch 11 oder 12, **dadurch gekennzeichnet, dass** die opaken Lasermarkierungen (200) Schwarz- und/oder Graustufenanteile der bunten codierten Information sind.

14. Sicherheitsdokument nach einem der Ansprüche 11 bis 13, **dadurch gekennzeichnet, dass** die monofarbigen Farbfelder transluzent sind.

15. Sicherheitsdokument nach einem der Ansprüche 11 bis 14, **dadurch gekennzeichnet, dass** die Farbfelder (60) eines Satzes von Farbfelder, die einem Bildelement (90) zugeordnet sind, in einer Reihe benachbart zueinander angeordnet sind.

## Claims

1. Method for producing a security document (1000) comprising the steps of:
providing at least one substrate layer (10);
applying a color pattern (50) consisting of at least two different types (61-63) of respectively mono-colored color fields (60) onto a surface of the at least one substrate layer or in the inside of the at least one substrate layer (10), wherein the different types (61-63) of color fields (60) generate different color impressions of primary color tints of a gamut;
providing at least one additional substrate layer (20) having at least one planar metal field (100), which is opaque in the visible wavelength range, or providing the at least one additional substrate layer (20) and applying the at least one planar metal field (100), which is opaque in the visible wavelength range, onto a surface of the at least one substrate layer (10) or onto a surface of the at least one additional substrate layer (20);
compiling the at least one substrate layer (10) and the at least one additional substrate layer (20) in a manner such that neither the color pattern nor the at least one planarly extended metal field (100), which is opaque in the visible wavelength range, are arranged on a top side or bottom side of the substrate layer stack, and the at least one planarly extended metal field planarly superimposes the color pattern in at least one continuous region with respect to a viewing direction through one top side of the substrate layer stack;
joining the substrate layers stack to a document body (1) in a lamination method;
inserting perforations into the metal field (100) by means of laser radiation in such a manner that the perforations are arranged register-true to each of one of the color fields (60) with respect to a prescribed viewing direction through the top side of the document body (1) so that a colored information is coded by interaction of the color fields (60) exposed by the perforations (110) for viewing through the top side of the lamination body, and
introducing opaque laser markings (200) into material of the document body (1), which is transparent in the visible wavelength range, between the top side (2) of the document body and the metal field (100) by means of laser radiation, which complement the colored information in a register-true manner.

2. Method of claim 1 **characterised in that** the primary color tints of the at least two different types (61-63) of color fields are selected either from the group of primary color tints cyan, magenta, yellow or the group of primary color tints red, green or blue.

3. Method of either of claim 1 or 2 **characterised in that** the color pattern (50) is configured so that the color pattern (50) can be broken down into image elements (90), a set of spatially adjacent color fields (60) being associated with each image element (90) so that each image element can accept a color tint from the gamut which is spread out by the color tints of the color fields (60) occurring in the color pattern (50), with the color tint of an image element being determined by a color addition or color subtraction of the color tints of the color fields associated with the image element which are exposed by perforations (110) selectively configured in the register for the fields.

4. Method of claim 3 **characterised in that** the pattern is configured such that a set of color fields (60) each comprises at least one color field of each type (61-63) of color fields which occur in the color pattern (50).

5. Method of either of claim 3 or 4 **characterised in that** the color fields (60) of the respective set of color fields (60) are arranged relative to one another in the same way in each of the image elements (90).

6. Method of either of claim 3 or 4 **characterised in that** the color fields (60) of the set of color fields (60) which are associated with an image element (90) are arranged differently in the different image elements (90).

7. Method of any one of the preceding claims **characterised in that** the color pattern (50) of the color fields (60) is structured in such a way that a plurality of color fields (60) are each spatially adjacently configured, which in combination bring about different color tints of the gamut spread out by the primary color tints of the color fields (60) occurring in the color pattern (50) depending on the different exposure of the individual color fields (60) of the respective plurality of color fields (60) interacting in combination.

8. Method of any one of the preceding claims **characterised in that** the perforations (110) are configured to have different planar sizes.

9. Method of any one of the preceding claims **characterised in that** the opaque laser marking (200) is executed temporally and locally separate from the production of a document body blank (5).

10. Method of claim 4 **characterised in that** information about the arrangement of the color fields (60) in the color pattern (50) is stored in a database; and an identifier (150) is stored in the document body (1) separately from the color pattern (50) by which in the database the information about the arrangement of the color fields (60) in the color pattern (50) is identifiable; and colored information is captured before the configuring of the perforations (110); the identifier (150) stored in the document body is captured, by way of the identifier stored and captured in the document body the information stored in the database about the arrangement of the color fields (60) in the color pattern (50) are read, the colored information is broken down into color extracts consistent with the primary color tints of the different types of color fields (60) of the color patterns (50) and the laser radiation is introduced positioned depending on the color extract information and the information about the arrangement of the color fields (60) for generating the perforations in the document body (1).

11. Security document (1000) comprising a lamination body assembled from a plurality of layers, with the lamination body comprising a top side (2) and an opposite bottom side (3) and with a color pattern (50) being applied in at least one plane lying inside the lamination body parallel to the top side (2), said color pattern consisting of at least two different types (61-63) of mono-colored color fields (60) each, there being arranged between the color pattern and the top side (2) a metal field (100) which is opaque in the visible spectral range and which covers at least a continuous region of the color pattern relative to a prescribed viewing direction except for the perforations configured in this metal field (100), the perforations being configured in the register with the color fields (60) of the color pattern (50) relative to the prescribed viewing direction so that a colored information is coded by interaction of the color fields (60) exposed by the perforations (110) for viewing through the top side (2) of the lamination body, with the material of the document body being transparent in the visible wavelength range at least in a volume region which overlays a partial region of the region in which the at least one metal field (100) covers the color pattern (50), with however opaque laser markings (200) which complement the colored information in a register-true manner with respect to the prescribed viewing direction being configured between the top side (2) of the document body and the metal field (100) in the volume region.

12. Security document of claim 11 **characterised in that** the color pattern (50) of the color fields (60) is structured in such a way that a plurality of color fields (60) are each spatially adjacently configured, which in combination can bring about different color tints of the gamut spread out by the primary color tints of the color fields (60) occurring in the color pattern (50) depending on the different exposure of the individual color fields (60) of the respective plurality of color fields (60) interacting in combination.

13. Security document of claim 11 or 12 **characterised in that** the opaque laser markings (200) are black and/or gray scale portions of the colored coded information.

14. Security document of any one of claims 11 to 13 **characterized in that** the mono-colored color fields are translucent.

15. Security document of any one of claims 11 to 14 **characterised in that** the color fields (60) of a set of color fields associated with an image element (90) are arranged in a row adjacent to one another.

## Revendications

1. Procédé de fabrication d'un document de sécurité (1000) comprenant les étapes de :
fourniture d'au moins une couche de substrat (10) ;
application d'un motif coloré (50) composé d'au moins deux différents types (61-63) de champs de couleur respectivement monochromes (60) sur une surface de l'au moins une couche de substrat ou à l'intérieur de l'au moins une couche de substrat (10), dans lequel les différents types (61-63) de champs de couleur (60) engendrent différentes impressions de couleur de tons primaires d'un gamut ;
fourniture d'au moins une autre couche de substrat (20) avec au moins un champ métallique (100) réalisé à plat, opaque dans la gamme de longueurs d'onde visibles ou fourniture de l'au moins une autre couche de substrat (20) et application de l'au moins un champ métallique (100) réalisé à plat, opaque dans la gamme de longueurs d'onde visibles sur une surface de l'au moins une couche de substrat (10) ou une surface de l'au moins une autre couche de substrat (20) ;
compilation de l'au moins une couche de substrat (10) et de l'au moins une autre couche de substrat (20) de sorte que ni le motif coloré ni l'au moins un champ métallique (100) étendu à plat, opaque dans la gamme de longueurs d'onde visibles ne sont agencés au niveau d'un côté supérieur ou côté inférieur de l'empilement de couches de substrat et l'au moins un champ métallique étendu à plat recouvre le motif coloré à plat dans au moins une zone contigue par rapport à une direction d'observation à travers un côté supérieur de l'empilement de couches de substrat ;
assemblage de l'empilement de couches de substrat en un corps de document (1) dans un procédé de stratification ;
introduction de passages dans le champ métallique (100) au moyen de rayonnement laser de sorte que les passages sont agencés en parfait repérage avec respectivement un des champs de couleur (60) par rapport à une direction d'observation prédéfinie à travers le côté supérieur du corps de document (1), de sorte qu'une information multicolore est codée en coopération avec des champs de couleur (60) mis à nu par les passages (110) pour une observation à travers le côté supérieur du corps de stratification et
introduction de marquages laser opaques (200) dans un matériau transparent dans la gamme de longueurs d'onde visibles du corps du document (1) entre le côté supérieur (2) du corps de document et le champ métallique (100) au moyen de rayonnement laser, qui complètent l'information multicolore en parfait repérage.

2. Procédé selon la revendication 1, **caractérisé en ce que** les tons primaires des au moins deux différents types (61-63) de champs de couleur sont sélectionnées soit dans le groupe des tons primaires cyan, magenta, jaune, soit dans le groupe des tons primaires rouge, vert ou bleu.

3. Procédé selon l'une quelconque des revendications 1 ou 2, **caractérisé en ce que** le motif coloré (50) est réalisé de sorte que le motif coloré (50) peut être décomposé en pixels (90), dans lequel un ensemble de champs de couleur (60) spatialement adjacents est associé à chaque pixel (90), de sorte que chaque pixel peut adopter un ton du gamut, qui est étendu par les tons des champs de couleur (60) présents dans le motif coloré (50), dans lequel le ton d'un pixel est fixé par le biais d'une addition de couleur ou soustraction de couleur des tons des champs de couleur associés au pixel, qui sont mis à nu par des passages (110) réalisés de manière ciblée dans le repérage avec les champs.

4. Procédé selon la revendication 3, **caractérisé en ce que** le motif coloré est réalisé de sorte qu'un ensemble de champs de couleur (60) comprend respectivement au moins un champ de couleur de chaque type (61-63) de champs de couleur, qui apparaissent dans le motif coloré (50).

5. Procédé selon l'une quelconque des revendications 3 ou 4, **caractérisé en ce que** les champs de couleur (60) de l'ensemble respectif de champs de couleur (60) sont agencés de manière identique les uns par rapport aux autres dans chacun des pixels (90).

6. Procédé selon l'une quelconque des revendications 3 ou 4, **caractérisé en ce que** les champs de couleur (60) de l'ensemble de champs de couleur (60), qui sont associés à un pixel (90), sont agencés différemment dans les différents pixels (90).

7. Procédé selon l'une quelconque des revendications précédentes, **caractérisé en ce que** le motif coloré (50) des champs de couleur (60) est construit de sorte que respectivement une pluralité de champs de couleur (60) sont réalisés spatialement adjacents, qui engendrent en combinaison un des différents tons du gamut étendu par les tons primaires des champs de couleur (60) apparaissant dans le motif coloré (50) en fonction de la mise à nu différente des champs de couleur (60) individuels de la pluralité respective de champs de couleur (60) coopérant en combinaison.

8. Procédé selon l'une quelconque des revendications précédentes, **caractérisé en ce que** les passages (110) sont réalisés de différentes tailles à plat.

9. Procédé selon l'une quelconque des revendications précédentes, **caractérisé en ce que** le marquage laser opaque (200) est réalisé séparé dans le temps et l'espace de la fabrication d'une ébauche de corps de document (5).

10. Procédé selon la revendication 4, **caractérisé en ce qu'**une information sur l'agencement des champs de couleur (60) dans le motif coloré (50) est enregistrée dans une base de données ; et un identifiant (150) séparé du motif coloré (50) dans le corps de document (1) est enregistré, par le biais duquel l'information sur l'agencement des champs de couleur (60) dans le motif coloré (50) est identifiable dans la base de données ; et avant la réalisation des passages (110), une information multicolore est détectée ; l'identifiant (150) enregistré dans le corps de document est détecté, l'information enregistrée dans la base de données sur l'agencement des champs de couleur (60) dans le motif coloré (50) est lue à l'aide de l'identifiant détecté et enregistré dans le corps de document, l'information multicolore est décomposée en séparations de couleurs de manière adaptée aux tons primaires des différents types de champs de couleur (60) du motif coloré (50) et le rayonnement laser est introduit positionné en fonction des informations de séparation de couleur et de l'information sur l'agencement des champs de couleur (60) pour la génération des passages dans le corps de document (1).

11. Document de sécurité (1000) comprenant un corps de stratification, qui est assemblé à partir de plusieurs couches, dans lequel le corps de stratification présente un côté supérieur (2) et un côté inférieur (3) opposé et dans lequel un motif coloré (50) est appliqué dans au moins un plan situé à l'intérieur dans le corps de stratification parallèlement au côté supérieur (2), lequel se compose d'au moins deux différents types (61-63) de champs de couleur respectivement monochromes (60), et un champ métallique (100) opaque dans la gamme spectrale visible est agencé entre le motif coloré et le côté supérieur (2), qui recouvre au moins une zone contigue du motif coloré jusqu'à des passages réalisés dans ce champ métallique (100) par rapport à une direction d'observation prédéfinie, dans lequel les passages sont réalisés par rapport à la direction d'observation prédéfinie dans le repérage avec les champs de couleur (60) du motif coloré (50), de sorte qu'une information multicolore est codée en coopération avec les champs de couleur (60) mis à nu par les passages (110) pour une observation à travers le côté supérieur (2) du corps de stratification, dans lequel le matériau du corps du document est transparent dans la gamme de longueurs d'onde visibles au moins dans une zone de volume, qui recouvre une zone partielle de la zone dans laquelle l'au moins un champ métallique (100) recouvre le motif coloré (50), dans lequel des marquages laser (200) cependant opaques sont réalisés dans la zone de volume entre le côté supérieur (2) du corps de document et le champ métallique (100), qui complètent l'information multicolore en parfait repérage par rapport à la direction d'observation prédéfinie.

12. Document de sécurité selon la revendication 11, **caractérisé en ce que** le motif coloré (50) des champs de couleur (60) est construit de sorte que respectivement une pluralité de champs de couleur (60) sont réalisés spatialement adjacents, qui peuvent générer en combinaison un des différents tons du gamut étendu par les tons primaires des champs de couleur (60) apparaissant dans le motif coloré (50) en fonction de la mise à nu différente des champs de couleur (60) individuels de la pluralité respective de champs de couleur (60) coopérant en combinaison.

13. Document de sécurité selon la revendication 11 ou 12, **caractérisé en ce que** les marquages laser opaques (200) sont des parts de noir et/ou de niveaux de gris de l'information multicolore codée.

14. Document de sécurité selon l'une quelconque des revendications 11 à 13, **caractérisé en ce que** les champs de couleur monochromes sont translucides.

15. Document de sécurité selon l'une quelconque des revendications 11 à 14, **caractérisé en ce que** les champs de couleur (60) d'un ensemble de champs de couleur, qui sont associés à un pixel (90), sont agencés en une rangée de manière adjacente l'un par rapport à l'autre.
